# EUROPÄISCHE PATENTSCHRIFT

(11) **EP 2 788 225 B1**
(45) Veröffentlichungstag und Bekanntmachung des Hinweises auf die Patenterteilung: **06.04.2016**
(21) Anmeldenummer: 12791747.4
(22) Anmeldetag: 20.11.2012
(51) Int. Cl.: B60R 16/02, G05B 19/042, B60W 30/00

(54) **KOMMUNIKATIONSEINRICHTUNG FÜR EIN KRAFTFAHRZEUG**
COMMUNICATION DEVICE FOR A MOTOR VEHICLE
INSTALLATION DE COMMUNICATION POUR UN VEHICULE À MOTEUR

(30) Priorität: 08.12.2011 DE 102011088020
(43) Veröffentlichungstag der Anmeldung: 15.10.2014
(73) Patentinhaber: Bayerische Motoren Werke Aktiengesellschaft, 80809 München (DE)
(72) Erfinder: MAYSER, Christoph, 82008 Unterhaching (DE); PFEIFFER, Andreas, 83607 Holzkirchen (DE)
(86) Internationale Anmeldenummer: PCT/EP2012/073090
(87) Internationale Veröffentlichungsnummer: WO 2013/083398

(56) Entgegenhaltungen:
- EP-A2- 0 989 032
- WO-A1-2004/027530

## Beschreibung

Die Erfindung betrifft eine Kommunikationseinrichtung und ein Verfahren für ein Kraftfahrzeug mit mehreren Steuergeräten, welche an einen Datenbus zum Austausch von Daten angeschlossen sind. Insbesondere betrifft die Erfindung eine Kommunikationseinrichtung für ein Fahrerassistenzsystem in einem Kraftfahrzeug.

In Fahrerassistenzsystemen eines Kraftfahrzeugs kommen Sensoren zum Einsatz, die Informationen über die Fahrzeugumgebung zur Verfügung stellen. Solche Fahrerassistenzsysteme sind beispielsweise ein Spurwechselassistent oder ein Engstellenassistent. Bei diesen ist es notwendig, beide Seiten des Fahrzeuges zu überwachen. Hierfür werden in der Regel Paare von Sensoren verwendet, die jeweils eine Seite des Fahrzeuges sensorisch überwachen. Für einen Spurwechselassistenten sind die Sensoren beispielsweise jeweils seitlich am Heck des Fahrzeuges angebracht. Deren Überwachungsbereiche überlappen sich hierbei teilweise.

Die Sensoren sind mit jeweiligen Sensorsteuergeräten verbunden, welche die von den Sensoren erfassten Sensordaten verarbeiten. Typischerweise übermittelt hierbei eines der beiden Sensorsteuergeräte als Master die in beiden Sensorsteuergeräten vorliegenden Informationen, wie z.B. erkannte Objekte oder Bereiche, welche kollisionsfrei befahren werden können (auch als Freiräume bezeichnet) über einen Datenbus an wenigstens ein weiteres Steuergerät. Das als Master fungierende Sensorsteuergerät kommuniziert mit dem anderen Sensorsteuergerät, das als Slave fungiert, über einen internen Datenbus, um beispielsweise Sensorrohdaten oder Daten über die Eigenbewegung des Fahrzeuges auszutauschen. Durch die Vernetzung der beiden Sensorsteuergeräte untereinander kann das Sensor-Paar genauere Informationen über erkannte Objekte oder Freiräume zur Verfügung stellen, als wenn die von einem jeweiligen Sensor erfassten Daten einzeln an dem Datenbus zur Verfügung gestellt werden.

Ein System mit zwei Sensorsteuergeräteri wird im WO20041027530 beschrieben. Die Steuergeräte greifen auf Sensorikdaten zu und arbeiten jeweils ein Computerprogramm zur Steuerung von Betriebsabläufen.

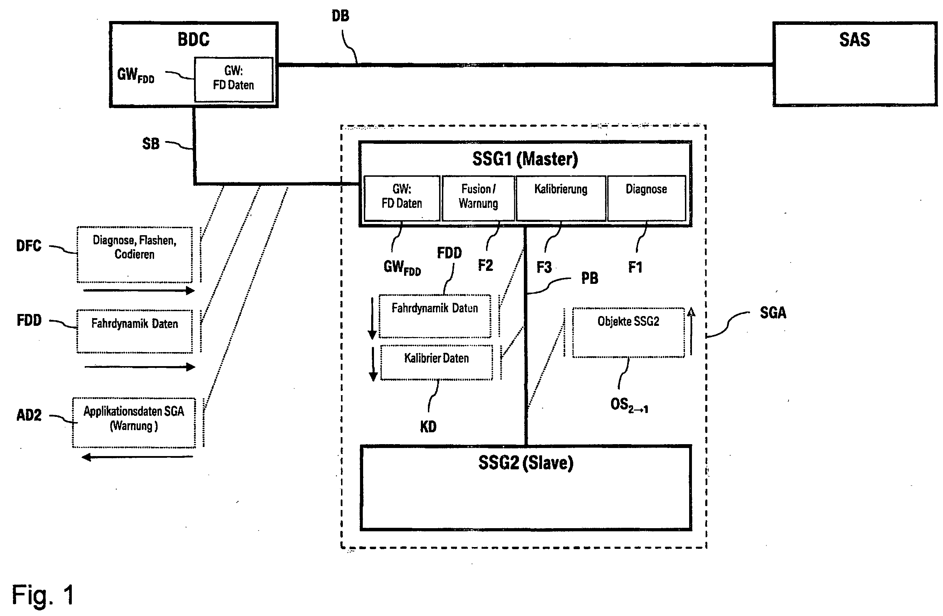

Eine derartige Kommunikationseinrichtung ist in schematischer Darstellung in Fig. 1 gezeigt. Das als Master fungierende Sensorsteuergerät ist mit SSG1, das als Slave fungierende Sensorsteuergerät mit SSG2 gekennzeichnet. Die Sensorsteuergeräte SSG1 und SSG2 sind über einen internen Datenbus PB zum Austausch von Daten miteinander verbunden. Jedes der beiden Sensorsteuergeräte SSG1, SSG2 ist mit einem nicht näher dargestellten jeweiligen Sensor verbunden, welche insbesondere sich überlappende Sensorerfassungsbereiche aufweisen und beispielsweise am Heck oder der Front eines Fahrzeugs angeordnet sind. Jedes der Sensorsteuergeräte SSG1, SSG2 erhält die von den Sensoren erfassten Sensordaten zur weiteren Verarbeitung übermittelt. Darüber hinaus dienen die Sensorsteuergeräte SSG1, SSG2 auch zur Ansteuerung, beispielsweise Konfiguration, der jeweiligen Sensoren. Zusammen bilden die Sensorsteuergeräte SSG1, SSG2 eine Steuergeräteanordnung SGA, welche über einen Datenbus SB mit einem Steuergerät BDC des Kraftfahrzeuges verbunden ist. Tatsächlich besteht die physikalische Verbindung lediglich zwischen dem als Master fungierenden Steuergerät SSG1 und dem Steuergerät BDC. Bei dem Steuergerät BDC kann es sich beispielsweise um ein zentrales Steuergerät des Kraftfahrzeugs handeln.

Über den Datenbus SB werden der Steuergeräteanordnung SGA von dem Steuergerät BDC Daten DFC zur Verfügung gestellt, die im Rahmen einer Funktionalität F1 eine Diagnose der Steuergeräteanordnung SGA und/oder der an diese angeschlossenen Sensoren, eine Codierung oder eine Programmierung (Flashen) betreffen. Die entsprechende Funktionalität F1 wird durch das als Master fungierende Sensorsteuergerät SSG1 übernommen ("Master Diagnose"). Gleiches gilt für die Vornahme einer Kalibrierung, welche eine Funktionalität F3 darstellt. Hierzu werden von dem als Master fungierenden Sensorsteuergerät SSG1 Kalibrier-Daten KD dem als Slave fungierenden Sensorsteuergerät SSG2 zur Verfügung gestellt. Hierdurch soll sichergestellt werden, dass der von den beiden Sensoren vorgenommene Überlappungsbereich definiert ist.

Im Rahmen seiner Funktion als Master für die Steuergeräteanordnung SGA erhält das Sensorsteuergerät SSG1 von dem als Slave fungierenden Steuergerät SSG2 unverarbeitete oder vorverarbeitete Sensordaten OS_{2→1}, um diese mittels einer Funktionalität F2 mit den eigenen Sensordaten zu verarbeiten und ein Ergebnis der Verarbeitung als Applikationsdaten AD2 der Steuergeräteanordnung SGA über den Datenbus SB an das Steuergerät BDC zu übertragen.

Um eine Vorverarbeitung der Sensordaten zu ermöglichen, sind in der Regel auch odometrische Daten des Fahrzeuges, d.h. Daten über die Eigenbewegung des Fahrzeuges relativ zu seiner Umwelt, erforderlich. Die Steuergeräteanordnung SGA erhält entsprechende Daten FDD ("Fahrdynamikdaten") von dem Steuergerät BDC. Diese werden durch das als Master fungierende Sensorsteuergerät SSG1 empfangen und über ein Gateway GW_{FDD} an das Sensorsteuergerät SSG2 übertragen. Somit liegen odometrische Daten ("Fahrdynamikdaten") in jedem der Sensorsteuergeräte SSG1, SSG2 vor, so dass die entsprechenden Sensordaten jeweils auf diese bezogen werden können. Die durch das Sensorsteuergerät SSG2 zu Objektdaten OS_{2→1} vorverarbeiteten Daten können dann durch das Sensorsteuergerät SSG1 zu einer Gesamtinformation verarbeitet werden.

In Fig. 1 ist weiterhin ein weiteres Steuergerät SAS dargestellt, das über einen weiteren Datenbus DB mit dem Steuergerät BDC zum Austausch von Daten gekoppelt ist. Das Steuergerät SAS stellt beispielsweise eine spezielle Funktionalität dar, welche nicht lediglich abstrahierte Applikationsdaten AD2, wie diese dem Steuergerät BDC zur Verfügung gestellt werden, benötigt, sondern ausführliche detaillierte Applikationsdaten über die von den Sensoren erfasste Situation. Während die Applikationsdaten AD2 beispielsweise lediglich die Information enthalten, dass sich relativ zum eigenen Fahrzeug von hinten links ein Fahrzeug nähert, benötigt das Steuergerät SAS zur Bereitstellung seiner Funktionalität detaillierte Informationen über das sich von hinten nähernde Fahrzeug, z.B. den Abstand zum Eigenfahrzeug, die Relativgeschwindigkeit zum Eigenfahrzeug usw. Derartige Informationen können durch die Steuergeräteanordnung ohne weiteres bereitgestellt werden. In der in Fig. 1 gezeigten Topologie müssen diese erweiterten Applikationsdaten dann über den Datenbus SB, das Steuergerät BDC, den Datenbus DB an das Steuergerät SAS übermittelt werden. Aufgrund eines zumindest temporär großen Datenumfangs der erweiterten Applikationsdaten kann auf dem Datenbus SB eine zu hohe Datenlast auftreten, wodurch andere Funktionalitäten beeinträchtigt werden könnten.

Es ist Aufgabe der vorliegenden Erfindung, eine Kommunikationseinrichtung sowie ein Verfahren zum Betreiben einer Kommunikationseinrichtung anzugeben, welche das Auftreten einer zu großen Buslast vermeidet.

Diese Aufgabe wird gelöst durch eine Kommunikationseinrichtung gemäß den Merkmalen des Patentanspruches 1 sowie ein Verfahren gemäß den Merkmalen des Patentanspruches 12. Vorteilhafte Ausgestaltungen ergeben sich aus den abhängigen Patentansprüchen.

Die Erfindung schafft eine Kommunikationseinrichtung für ein Kraftfahrzeug. Die Kommunikationseinrichtung umfasst ein erstes Steuergerät, ein zweites Steuergerät und eine Steuergeräteanordnung. Ferner ist ein erster Datenbus vorgesehen, an den das erste Steuergerät und die Steuergeräteanordnung zum Austausch von Daten angeschlossen sind. An einen zweiten Datenbus sind das zweite Steuergerät und die Steuergeräteanordnung zum Austausch von Daten angeschlossen. Die Steuergeräteanordnung umfasst zumindest ein erstes Sensorsteuergerät zur Steuerung eines ersten Sensors und ein zweites Sensorsteuergerät zur Steuerung eines zweiten Sensors. Der erste und der zweite Sensor weisen sich überlappende Sensorerfassungsbereiche auf. Über einen dritten Datenbus können das erste und das zweite Sensorsteuergerät zumindest vorverarbeitete Sensordaten austauschen. Das erste und das zweite Sensorsteuergerät sind dazu ausgebildet, im Master-Slave-Betrieb bezüglich zumindest einer Funktionalität betrieben zu werden. Dabei werden durch das erste Sensorsteuergerät als Master einer ersten Funktionalität erste Daten, welche durch das erste Steuergerät an dem ersten Datenbus bereitgestellt sind, für die Steuergeräteanordnung verarbeitet. Durch das zweite Sensorsteuergerät werden als Master einer zweiten Funktionalität erste Applikationsdaten für das zweite Steuergerät an dem zweiten Datenbus bereitgestellt.

Die Erfindung schafft ferner ein Verfahren zum Betreiben einer Kommunikationseinrichtung für ein Kraftfahrzeug. Die Kommunikationseinrichtung umfasst ein erstes Steuergerät, ein zweites Steuergerät und eine Steuergeräteanordnung, die zumindest ein erstes Sensorsteuergerät zur Steuerung eines ersten Sensors und ein zweites Sensorsteuergerät zur Steuerung eines zweiten Sensors umfasst, wobei der erste und der zweite Sensor sich überlappende Sensorerfassungsbereiche aufweisen. Ferner ist ein erster Datenbus vorgesehen, an den das erste Steuergerät und die Steuergeräteanordnung zum Austausch von Daten angeschlossen sind. An einen zweiten Datenbus sind das zweite Steuergerät und die Steuergeräteanordnung zum Austausch von Daten angeschlossen. Bei dem erfindungsgemäßen Verfahren tauschen das erste und das zweite Sensorsteuergerät über einen dritten Datenbus zumindest vorverarbeitete Sensordaten aus. Das erste und das zweite Sensorsteuergerät werden in einem Master-Slave-Betrieb bezüglich zumindest einer Funktionalität betrieben, wobei durch das erste Sensorsteuergerät als Master einer ersten Funktionalität erste Daten, welche durch das erste Steuergerät an dem ersten Datenbus bereitgestellt werden, für die Steuergeräteanordnung verarbeitet werden, und wobei durch das zweite Sensorsteuergerät als Master einer zweiten Funktionalität erste Applikationsdaten für das zweite Steuergerät an dem zweiten Datenbus bereitgestellt werden.

Durch die erfindungsgemäße Kommunikationseinrichtung werden die technische Komplexität der Kommunikationseinrichtung und höhere Kosten durch spezifische Komponenten vermieden, indem die Sensorsteuergeräte der Steuergeräteanordnung je nach Funktionalität in unterschiedlicher Master-Slave-Konfiguration betrieben werden. Insbesondere ergibt sich hierdurch der Vorteil, dass der das erste Steuergerät und die Steuergeräteanordnung verbindende erste Datenbus keine übermäßig hohe Buslast zu tragen hat. Dies resultiert daraus, dass die datenintensiven ersten Applikationsdaten von dem als Master betriebenen zweiten Sensorsteuergerät bereitgestellt werden, welches nicht an den ersten Datenbus angeschlossen ist. Ermöglicht wird die erfindungsgemäße Kommunikationseinrichtung dadurch, dass die unterschiedlichen Funktionalitäten der Steuergeräteanordnung nicht gleichzeitig auftreten, wodurch die flexible Festlegung von Master und Slave über das entsprechende Vorsehen der Funktionalität in einem jeweiligen der Sensorsteuergeräte steuerbar ist.

In einer zweckmäßigen Ausgestaltung umfassen die ersten Daten der ersten Funktionalität die Wartung und/oder Diagnose der Steuergeräteanordnung betreffende Daten.

Demgegenüber umfasst die zweite Funktionalität die Vorverarbeitung von, von dem ersten und dem zweiten Sensor erfassten Messdaten, wobei die vorverarbeiteten Messdaten als erste Applikationsdaten bereitgestellt werden, welche durch die Sensoren erfasste Objekte und die Information über Position und/oder Bewegung relativ zu dem ersten und dem zweiten Sensor umfassen. Die ersten Applikationsdaten umfassen somit aufbereitete Rohdaten der Sensoren, wobei diese durch Verarbeitung und/oder Zusammenfassung der jeweiligen Sensordaten erzeugt werden. Die ersten Applikationsdaten umfassen beispielsweise Informationen über sämtliche durch die Sensoren erkannten Objekte. Objekte stellen eine Sammlung von Reflexionspunkten dar, die zu einer Einheit zusammengefasst werden können. Eine solche Einheit kann dann z.B. einem Fahrzeug, einem Motorrad, einem Fußgänger, einem Radfahrer, usw. entsprechen. Die Zusammenfassung sämtlicher erkannter Objekte der beiden Sensorsteuergeräte wird als "Fusion" bezeichnet, wobei Daten der Fusion den ersten Applikationsdaten entsprechen. Aufgrund dieser detaillierten ersten Applikationsdaten kann das zweite Steuergerät beispielsweise eine für ein Fahrerassistenzsystem vorgesehene Funktionalität bereitstellen.

Gemäß einer weiteren Ausgestaltung umfasst die zweite Funktionalität die Verarbeitung von, von dem ersten und dem zweiten Sensor erfassten Messdaten, wobei ein Ergebnis der Verarbeitung als zweite Applikationsdaten über das erste Sensorsteuergerät als Slave an den ersten Datenbus bereitgestellt werden zur Verarbeitung durch das erste Steuergerät. Die zweiten Applikationsdaten umfassen somit lediglich eine abstrahierte Information, welche aus den Sensordaten ermittelt ist. Die zweiten Applikationsdaten umfassen beispielsweise lediglich eine abstrakte Information, wie z.B. "Fahrzeug von hinten links", "Fahrzeug von hinten rechts" usw. Eine solche abstrahierte Information kann mit geringer Bandbreite von der Steuergeräteanordnung, insbesondere dem mit dem ersten Datenbus verbundenen ersten Sensorsteuergerät, an das erste Steuergerät zur weiteren Verarbeitung übertragen werden.

Demnach können die ersten Applikationsdaten gegenüber den zweiten Applikationsdaten einen größeren Datenumfang, insbesondere ein Mehrfaches, aufweisen. Die zweiten Applikationsdaten werden beispielsweise durch eine Reduktion der Fusionsdaten bzw. ersten Applikationsdaten, auf ein abstraktes Niveau gebracht. Derartige erste Applikationsdaten werden in dieser Beschreibung auch als "Warnung" bezeichnet.

In einer weiteren zweckmäßigen Ausgestaltung werden dem zweiten Sensorsteuergerät als Master der zweiten Funktionalität von dem ersten Sensorsteuergerät Sensordaten des ersten Sensors zur Verarbeitung bereitgestellt. Aus diesen Sensordaten ist der Master der zweiten Funktionalität in der Lage, sowohl die ersten als auch die zweiten Applikationsdaten zu ermitteln. Wie erläutert, erfolgt die Bereitstellung der umfangreichen, ersten Applikationsdaten durch das Sensorsteuergerät, das als Master der zweiten Funktionalität fungiert. Die Bereitstellung der im Vergleich dazu geringeren zweiten Applikationsdaten erfolgt durch das als Slave fungierende Sensorsteuergerät, indem die entsprechenden Daten über den dritten Datenbus zunächst innerhalb der Steuergeräteanordnung übertragen werden.

Gemäß einer weiteren zweckmäßigen Ausgestaltung werden dem zweiten Sensorsteuergerät als Master der zweiten Funktionalität von dem ersten Sensorsteuergerät für eine Odometrieberechnung erforderliche Daten zur Verarbeitung bereitgestellt, welche von dem ersten Steuergerät an dem ersten Datenbus bereitgestellt sind. Die Übertragung der für die Odometrieberechnung erforderlichen Daten innerhalb der Steuergeräteanordnung erfolgt wiederum über den dritten Datenbus.

In einer weiteren zweckmäßigen Ausgestaltung werden durch das zweite Sensorsteuergerät als Master einer dritten Funktionalität dem ersten Sensorsteuergerät als Slave Kalibrierdaten bereitgestellt. Eine Kalibrierung ist erforderlich, um den Erfassungsbereich der beiden Sensoren in definierter Weise zueinander anzupassen. Auch bezüglich dieser Funktionalität übernimmt eines der beiden Geräte die Funktion des Masters, während das andere die Funktion des Slaves innehat.

Das erste Sensorsteuergerät und das zweite Sensorsteuergerät weisen jeweils zwei Busanschlüsse auf. Insbesondere können das erste Sensorsteuergerät und das zweite Sensorsteuergerät bezüglich ihrer Hardware identisch ausgebildet sein. Hierdurch ergeben sich Kosteneinsparungen bei der Produktion, da keine unterschiedlichen Sensorsteuergeräte bereitgestellt werden müssen. Gleiches gilt für die Lagerhaltung bzw. Steuerung in Werksprozessen. Welches der Sensorsteuergeräte bezüglich einer Funktionalität dann zum Master und welches zum Slave wird, wird allein durch die entsprechende Software des betreffenden Sensorsteuergerätes festgelegt. Wie erläutert, können die unterschiedlichen Funktionalitäten nicht gleichzeitig auftreten, so dass die flexible Festlegung von Master und Slave über die entsprechende Software der Sensorsteuergeräte einstellbar ist.

Der erste und der zweite Sensor bilden ein Sensorpaar, dessen Sensoren z.B. optische Sensoren oder Radarsensoren sind.

Die Erfindung wird nachfolgend näher anhand von Ausführungsbeispielen in der Zeichnung erläutert. Es zeigen:
- Fig. 1: eine schematische Darstellung einer bekannten Kommunikationseinrichtung, in welcher sämtliche Daten von und zu einer Steuergeräteanordnung über einen einzigen Datenbus übertragen werden,
- Fig. 2: eine Kommunikationseinrichtung, in welcher eine Datenübertragung von und zu einer Steuergeräteanordnung über zwei Datenbusse erfolgt,
- Fig. 3: eine erfindungsgemäße Kommunikationseinrichtung mit optimierter Datenlast und reduzierter technischer Komplexität,
- Fig. 4: eine schematische Darstellung einer ersten alternativen Kommunikationseinrichtung, und
- Fig. 5: eine schematische Darstellung einer zweiten, alternativen Kommunikationseinrichtung.

Die der Erfindung zu Grunde liegende Ausgangssituation wurde einleitend bereits in Verbindung mit Fig. 1 erläutert. In den nachfolgend beschriebenen Ausführungsbeispielen sind die in Verbindung mit Fig. 1 beschriebenen Komponenten in unterschiedlicher Verschaltung dargestellt. Dabei sind gleiche Komponenten mit gleichen Bezugszeichen versehen. In den Figuren sind zwischen den einzelnen Komponenten ausgetauschte Daten durch mit punktierter Linienumrandung dargestellten Kästchen gekennzeichnet. Der jeweils zugeordnete Pfeil gibt die Richtung der Kommunikation über einen betreffenden Datenbus an.

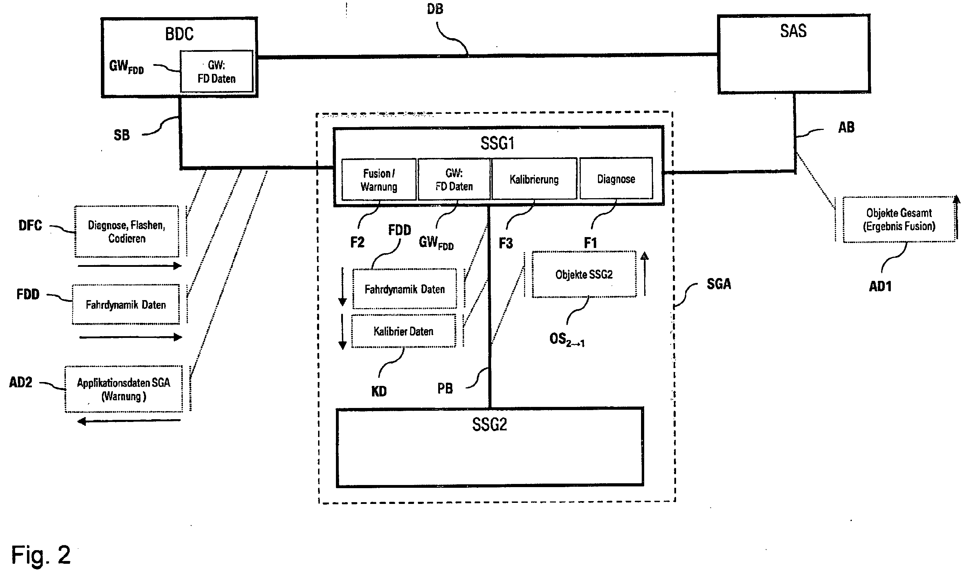

Die nachfolgend beschriebenen Kommunikationseinrichtungen gemäß den Figuren 2 bis 5 umfassen jeweils eine Steuergeräteanordnung SGA, ein erstes Steuergerät BDC sowie ein zweites Steuergerät SAS. An einen ersten Datenbus SB sind das erste Steuergerät BDC und die Steuergeräteanordnung SGA zum Austausch von Daten angeschlossen. An einen zweiten Datenbus AB sind das zweite Steuergerät SAS und die Steuergeräteanordnung SGA zum Austausch von Daten angeschlossen. Die Steuergeräteanordnung SGA umfasst zumindest ein erstes Sensorsteuergerät SSG1 zur Steuerung eines nicht näher dargestellten ersten Sensors und ein zweites Sensorsteuergerät SSG2 zur Steuerung eines ebenfalls nicht näher dargestellten zweiten Sensors. Das erste und das zweite Sensorsteuergerät SSG1, SSG2 der Steuergeräteanordnung SGA können über einen dritten Datenbus PB Daten austauschen. Darüber hinaus ist ein weiterer, vierter Datenbus DB dargestellt, welcher dem Austausch von Daten zwischen dem ersten Steuergerät BDC und dem zweiten Steuergerät SAS dient.

Der erste und der zweite Sensor bilden ein Sensorpaar, welches beispielsweise am Heck eines Fahrzeugs mit sich überlappendem Sensorerfassungsbereich angeordnet ist. Die Sensoren können optische Sensoren oder Radarsensoren sein, um die Annäherung eines Fremdfahrzeugs oder anderen Objekts an das eigene Fahrzeug zu detektieren. Eine derartige Sensoranordnung kommt insbesondere für ein Fahrerassistenzsystem, wie z.B. einen Spurwechselassistent oder einen Engstellenassistent, zum Einsatz. Die Anordnung der Sensoren könnte in einer alternativen Ausgestaltung auch an der Front des Fahrzeugs oder an der linken Seite oder der rechten Seite sein. Ebenso könnten an einem Fahrzeug mehrere Sensorpaare vorgesehen sein, welche in nachfolgend beschriebener Weise beschaltet bzw. angesteuert sind. Die Anordnung der Sensoren hängt im Wesentlichen von der Funktionalität des zu realisierenden Fahrerassistenzsystems ab. In der Regel sind der erste und der zweite Sensor an dem Fahrzeug derart angeordnet, dass diese sich überlappende Sensorerfassungsbereiche aufweisen.

Das erste Steuergerät BDC stellt beispielsweise ein zentrales Steuergerät des Kraftfahrzeugs dar. Es versteht sich, dass das erste Steuergerät nicht als einziges Steuergerät ausgebildet zu sein braucht, sondern eine beliebige Vielzahl an Steuergeräten umfassen kann, welche über einen oder mehrere Datenbusse oder sonstige Datenverbindungen Daten austauschen können.

Das zweite Steuergerät SAS repräsentiert beispielsweise ein ausgewähltes Steuergerät, welches der Bereitstellung einer bestimmten Fahrerassistenz-Funktionalität dient. Das zweite Steuergerät SAS wird in dem Fahrzeug beispielsweise nur dann vorgesehen, wenn ein Kunde dieses im Rahmen einer Sonderausstattung bestellt hat. Demgegenüber sind das erste Steuergerät BDC und die Steuergeräteanordnung SGA bereits in einer Variante des Kraftfahrzeugs vorhanden, in der ein Fahrerassistenzsystem mit einer geringeren, einfacheren Funktionalität bereitgestellt ist. In der weiteren Beschreibung wird davon ausgegangen, dass die einfache, durch das erste Steuergerät BDC bereitgestellte Funktionalität ein Spurwechselassistent ist. Das zweite Steuergerät SAS stellt demgegenüber eine optimierte Variante eines Spurwechselassistenten dar, für den Informationen in einer sehr viel größeren Detailliertheit bereitgestellt werden müssen.

Wie einleitend bereits erläutert, fällt beim Vorhandensein des zweiten Steuergeräts SAS eine große Datenmenge an, welche durch die Steuergeräteanordnung SGA bereitgestellt wird und an das zweite Steuergerät zur weiteren Verarbeitung übertragen werden muss.

Um die Buslast über den ersten Datenbus SB, der beispielsweise einen System-Bus der Kommunikationseinrichtung darstellt, nicht auf unzulässige Werte ansteigen zu lassen, sieht die in Fig. 2 dargestellte Variante vor, den zweiten Datenbus AB zwischen dem zweiten Steuergerät SAS und dem ersten Sensorsteuergerät SSG1 der Steuergeräteanordnung SGA auszubilden. Insbesondere werden über den zweiten Datenbus AB erste Applikationsdaten AD1 übertragen. Die ersten Applikationsdaten AD1 umfassen das Ergebnis einer Datenfusion, d.h. der Zusammenfassung aller Objekte, welche eine Sammlung von Reflexionspunkten, die aus den Sensordaten des ersten und zweiten Sensors zu einer Einheit zusammengefasst sind, bestehen. Ein Objekt entspricht dabei z.B. einem detektierten Kraftfahrzeug, Motorrad, einem Fußgänger oder Radfahrer. Durch die Fusion werden im Rahmen der ersten Applikationsdaten AD1 diejenigen Daten an das zweite Steuergerät SAS übertragen, welche es dem Steuergerät SAS erlauben, die einzelnen Objekte im Hinblick auf Position und/oder Geschwindigkeit und/oder weiterer Parameter relativ zum eigenen Fahrzeug zu bestimmen. Aus dieser Vielzahl an Informationen ist das zweite Steuergerät SAS in der Lage, einen Spurwechselassistent mit erweiterter Funktionalität bereitzustellen.

Ein Spurwechselassistent mit einer erweiterten Funktionalität kann sich zum Beispiel über die betrachteten Eingangsgrößen und / oder über die Ausgestaltung der Rückmeldung an den Fahrer unterscheiden. So kann zum Beispiel der Spurwechselassistent den Fahrer mit einer optischen Anzeige auf die Situation "Fahrzeug nähert sich von hinten auf der Nebenspur" aufmerksam machen und gegebenenfalls zusätzlich eine Vibration am Lenkrad schalten, sofern der Fahrer das eigene Fahrzeug auf die Nebenspur lenken will. Ein "erweiterter Spurwechselassistent" kann neben der Gefahrenquelle "Fahrzeug nähert sich von hinten auf der Nebenspur" weitere Eingangsgrößen, wie zum Beispiel vorhandene Spurmarkierungen oder bauliche Trennungen wie Leitplanken verwenden und den Fahrer dadurch gesamthaft vor Kollisionen im Seitenbereich warnen. Die Rückmeldung an den Fahrer kann über das Einsteuern eines Lenkmomentes spezifischer ausgeprägt werden. Soll ein Lenkmoment als Rückmeldung verwendet werden, ist es notwendig den genauen seitlichen Abstand zwischen dem eigenen Fahrzeug und dem "kritischen" Objekt zu kennen, um das Moment in Relation zu diesem Abstand auszuprägen.

Ein Spurwechselassistent mit einfache Funktionalität würde demgegenüber eine bloße Warnung, z.B. in Form eines aufblinkenden Lampe oder eine Hinweises in einem Control Display, umfassen, dass sich ein Objekt im Gefahrenbereich befindet.

Die Fusion der von dem ersten und dem zweiten Sensor bereitgestellten Sensordaten und die Vorverarbeitung wird durch eine zweite Funktionalität F2, welche im ersten Sensorsteuergerät SSG1 realisiert ist, vorgenommen. Hierzu werden dem ersten Sensorsteuergerät SSG2 Objektdaten OS_{2→1} von dem zweiten Steuergerät SSG2 bereitgestellt. Die Objektdaten umfassen vorverarbeitete Sensordaten des zweiten Sensors, wobei die Vorverarbeitung die Berücksichtigung von Fahrdynamikdaten FDD umfasst, welche der Steuergeräteanordnung SGA am ersten Sensorsteuergerät SSG1 von dem ersten Steuergerät BDC zur Verfügung gestellt werden. Zur Weiterleitung der für die Odometrieberechnung erforderlichen Fahrdynamikdaten FDD an das zweite Sensorsteuergerät SSG2 ist in dem ersten Sensorsteuergerät SSG1 ein Gateway GW_{FDD} vorgesehen.

Im Rahmen der Funktionalität F2 werden nicht nur die ersten Applikationsdaten AD1 über den zweiten Datenbus AB an das zweite Steuergerät SAS übermittelt. Vielmehr wird im Rahmen der Funktionalität F2 auch eine, eine Warnung repräsentierende Information erzeugt und als zweite Applikationsdaten AD2 über den ersten Datenbus SB zur Verarbeitung an das erste Steuergerät BDC übertragen. Die zweiten Applikationsdaten AD2 umfassen reduzierte Fusionsdaten auf ein abstraktes Niveau, wie z.B. "es nähert sich ein Fahrzeug von hinten links". Die zweiten Applikationsdaten AD2 umfassen damit keinerlei detaillierte Informationen über die Position und/oder Geschwindigkeit eines oder mehrerer detektierter Objekte. Aus diesem Grund ist der Umfang der zweiten Applikationsdaten AD2 erheblich geringer als der der ersten Applikationsdaten AD1.

Bezüglich der zweiten Funktionalität F2 fungiert das erste Sensorsteuergerät SSG1 als Master, während das zweite Sensorsteuergerät SSG2 den Slave darstellt. Diese Aufteilung (SSG1 als Master und SSG2 als Slave) ist auch bezüglich weiterer Funktionalitäten F1 und F3 vorgesehen. Im Rahmen der Funktionalität F1 erfolgt eine Diagnose der Steuergeräteanordnung. Hierzu empfängt das erste Sensorsteuergerät SSG1 von dem ersten Steuergerät BDC über den Datenbus SB Daten DFC, die eine Diagnose, eine Codierung oder eine Programmierung (Flashen) der Steuergeräteanordnung betreffen. Ist beispielsweise eine Diagnose durchzuführen, so fragt das erste Sensorsteuergerät SSG1 erforderliche Daten vom zweiten Sensorsteuergerät SSG2 ab und überträgt das Ergebnis an das erste Steuergerät BDC. Das gleiche Vorgehen erfolgt bei einer Codierung oder Programmierung.

Auch eine Kalibrierung im Rahmen der dritten Funktionalität F3 wird federführend durch das erste Steuergerät SSG1 vorgenommen. Hierzu werden Kalibrierdaten KD von dem ersten Sensorsteuergerät SSG1 an das zweite Steuergerät SSG2 über den dritten Datenbus DB übertragen. Eine Kalibrierung ist beispielsweise dann erforderlich, wenn die Ausrichtung der Sensorerfassungsbereiche der beiden Sensoren zueinander über ein vorgegebenes Maß hinaus abweicht.

Die in Fig. 2 gezeigte Topologie ermöglicht eine Entlastung des ersten Datenbusses SB, da die datenintensiven ersten Applikationsdaten AD1 über den zweiten Datenbus AB direkt an das zweite Steuergerät SAS übertragen werden. Allerdings erfordert diese Variante das Vorsehen eines dritten Busanschlusses an dem als Master fungierenden Sensorsteuergerät SSG1, wodurch die Realisierung verhältnismäßig teuer ist.

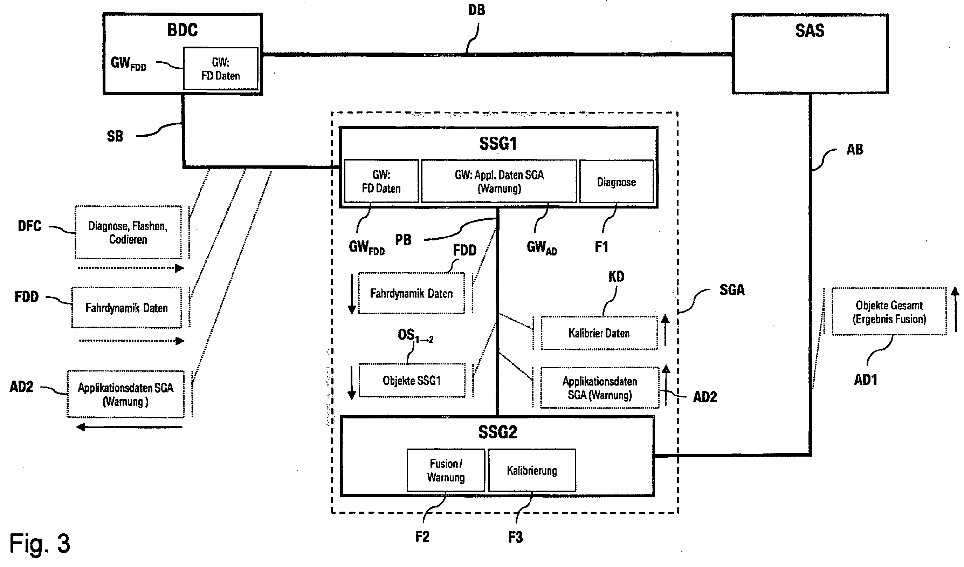

Eine bevorzugte Umsetzung einer erfindungsgemäßen Kommunikationseinrichtung ist in Fig. 3 dargestellt. Bei dieser Kommunikationseinrichtung ist der zweite Datenbus AB zwischen dem zweiten Steuergerät SAS und dem zweiten Sensorsteuergerät SSG2 vorgesehen. Hierdurch ist es möglich, das erste und das zweite Sensorsteuergerät SSG1, SSG2 mit jeweils zwei Busanschlüssen vorzusehen. So weist das erste Sensorsteuergerät SSG1 einen Busanschluss für den ersten Datenbus SB und den dritten Datenbus PB auf. Das zweite Sensorsteuergerät SSG2 weist einen Anschluss für den dritten Datenbus PB und den zweiten Datenbus AB auf. In dieser Variante ist es möglich, die Sensorsteuergeräte SSG1, SSG2 hinsichtlich ihrer Hardware als Gleichteile auszubilden.

Um die oben beschriebene Funktionalität sicherstellen zu können, sind die Funktionalitäten F1, F2, F3 in unterschiedlicher Weise auf die beiden Sensorsteuergeräte SSG1 und SSG2 verteilt. Bei der ersten Funktionalität F1, mit welcher eine Diagnose der Steuergeräteanordnung SGA durchgeführt werden kann, stellt das erste Sensorsteuergerät SSG1 den Master und das zweite Sensorsteuergerät SSG2 den Slave dar.

Bezüglich der zweiten Funktionalität F2, in der eine detaillierte und abstrahierte Aufbereitung der von den Sensoren bereitgestellten Daten erfolgt (d.h. eine Ermittlung der ersten und der zweiten Applikationsdaten AD1 und AD2), stellt hingegen das zweite Sensorsteuergerät SSG2 den Master und das erste Sensorsteuergerät SSG1 den Slave dar. Dies hat zur Folge, dass nunmehr durch das erste Sensorsteuergerät SSG1 dem zweiten Sensorsteuergerät SSG2 Objektdaten OS_{1→2} zur Verfügung gestellt werden, zusammen mit den für die Odometrieberechnung erforderlichen Fahrdynamikdaten FDD. Die Objektdaten OS_{1→2} umfassen mit den Fahrdynamikdaten FDD vorverarbeitete Sensordaten des ersten Sensors. Die durch das zweite Sensorsteuergerät SSG2 aus den Objektdaten OS_{1→2} und den mit den Fahrdynamikdaten vorverarbeiteten Sensordaten des zweiten Sensors ermittelten ersten Applikationsdaten AD1 werden direkt über den zweiten Datenbus AB an das zweite Steuergerät SAS übermittelt. Die zweiten Applikationsdaten AD2, die lediglich eine abstrahierte Form (d.h. eine Warnung) beinhalten, werden von dem zweiten Sensorsteuergerät SSG2 an das erste Steuergerät SSG1 übertragen. Dieses umfasst nunmehr ein weiteres Gateway GW_{AD} für die zweiten Applikationsdaten, so dass diese über den Datenbus SB dem ersten Steuergerät BDC bereitgestellt werden können.

Ebenso stellt das zweite Sensorsteuergerät SSG2 den Master für die dritte Funktionalität F3 für die Kalibrierung dar. Die Kalibrierdaten KD werden somit nunmehr von dem zweiten Sensorsteuergerät SSG2 an das erste Sensorsteuergerät SSG1 übertragen, das die entsprechenden Informationen verarbeitet und ausführt.

Da die Funktionalität F1 niemals gleichzeitig mit den Funktionalitäten F2 oder F3 ausgeführt wird, ist eine flexible Festlegung von Master und Slave über die entsprechende Software der Sensorsteuergeräte SSG1, SSG2 festlegbar. Die beiden Sensorsteuergeräte SSG1, SSG2 können somit mit jeweils zwei Busanschlüssen ausgestattet werden und bei identischer Hardware mit jeweils unterschiedlicher Software betrieben werden. Hierdurch ergeben sich Kosteneinsparungen in der Produktion sowie der Lagerhaltung bzw. Steuerung in den Werksprozessen aufgrund einer doppelten Stückzahl und dem Entfall einer Steuergeräte-Variante.

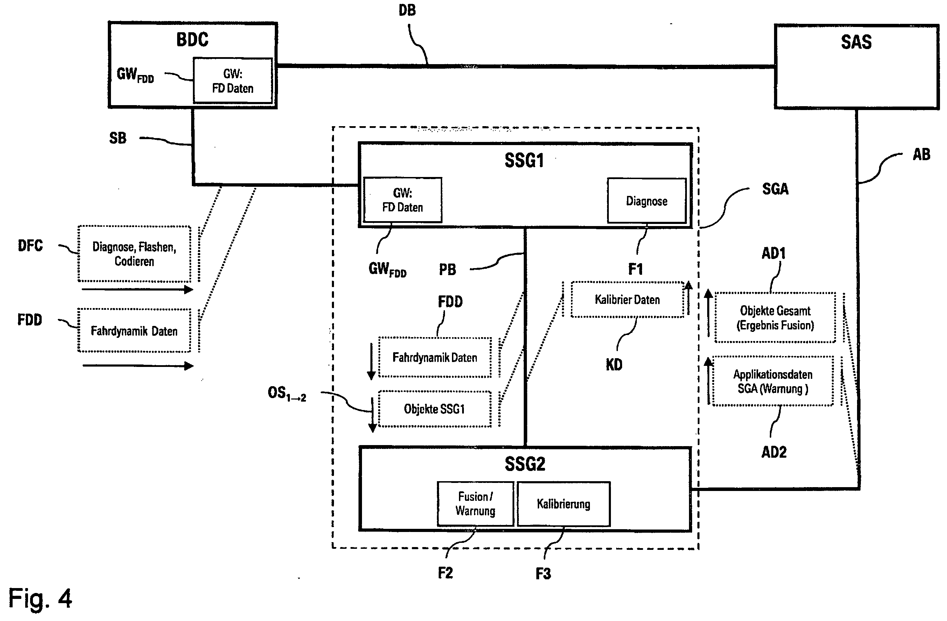

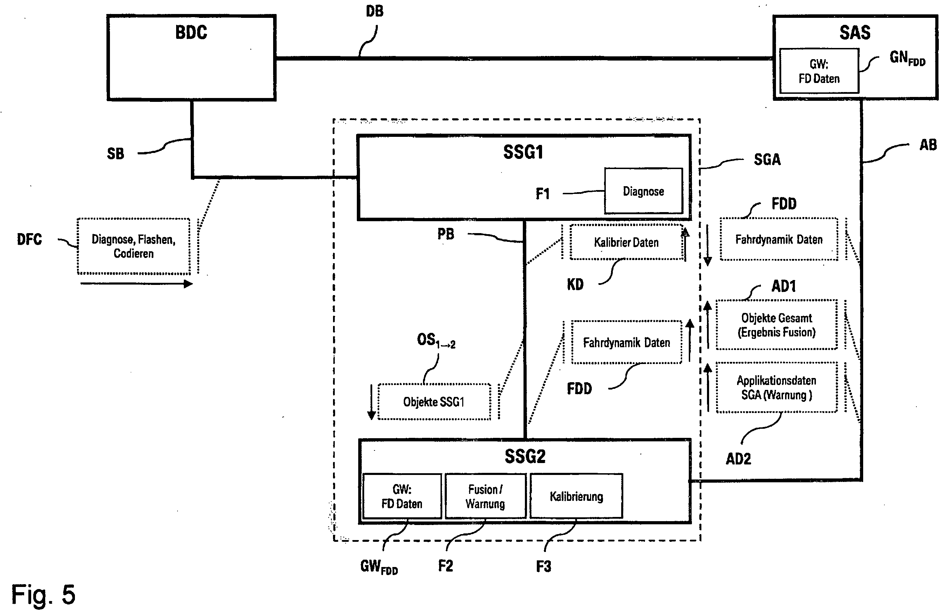

Die weiteren, in den Figuren 4 und 5 gezeigten Ausführungsbeispiele zeigen weitere alternative Ausgestaltungen einer erfindungsgemäßen Kommunikationseinrichtung. Diese basieren auf der in Verbindung mit Fig. 3 beschriebenen Topologie der Kommunikationseinrichtung.

In der ersten alternativen Ausgestaltung gemäß Fig. 4 erfolgt die Ausgabe der zweiten Applikationsdaten AD2 nicht über das bezüglich der Funktionalität F2 als Slave fungierende Sensorsteuergerät SSG1, sondern über das bezüglich F2 als Master fungierende Sensorsteuergerät SSG2. Die zweiten Applikationsdaten AD2 werden demgemäß über den zweiten Datenbus AB an das zweite Steuergerät SAS übertragen. Ebenso ist das zweite Steuergerät SAS, wie im Ausführungsbeispiel gemäß Fig. 3 beschrieben, Empfänger der ersten Applikationsdaten AD1. In dieser Ausgestaltungsvariante werden entweder die einfache sowie die erweiterte Funktionalität des Fahrerassistenzsystems, z.B. Spurwechselassistent, gleichermaßen durch das zweite Steuergerät SAS ausgeführt. Ist dies nicht erwünscht, so können die zweiten Applikationsdaten AD2 von dem zweiten Steuergerät SAS über den ersten Datenbus DB wiederum an das erste Steuergerät BDC übertragen werden. Gegebenenfalls muss dann auch in dem zweiten Steuergerät SAS ein entsprechendes Gateway für die zweiten Applikationsdaten AD2 vorgesehen werden.

In der zweiten Alternative gemäß Fig. 5, welche wiederum auf der in Verbindung mit Fig. 3 beschriebenen Topologie der Kommunikationseinrichtung basiert, werden analog Fig. 4 die ersten und zweiten Applikationsdaten AD1, AD2 von der bezüglich der Funktionalität F2 als Master fungieren den zweiten Sensorsteuergerät SSG2 über den zweiten Datenbus AB an das zweite Steuergerät SAS übertragen. Im Unterschied zur vorangegangenen Variante gemäß Fig. 4 werden jedoch die für die Odometrieberechnung erforderlichen Fahrdynamikdaten FDD nicht über den ersten Datenbus SB dem Sensorsteuergerät SSG1 bereitgestellt. Stattdessen werden die Fahrdynamikdaten FDD von dem ersten Steuergerät BDC an das zweite Steuergerät SAS übertragen, welches ein Gateway GW_{FDD} zur Weiterleitung an das zweite Sensorsteuergerät SSG2 über den zweiten Datenbus AB umfasst.

In den alternativen Ausgestaltungen gemäß Figuren 4 und 5 kann die Datenlast des Systembusses SB weiter reduziert werden. Andererseits müssen für die Bereitstellung der Funktionalitäten weitere Datenübertragungswege in Kauf genommen werden, wodurch insbesondere der zweite Datenbus AB und der vierte Datenbus DB stärker belastet werden.

Die erfindungsgemäß vorgeschlagenen Kommunikationseinrichtungen erlauben das Vorsehen einer Steuergeräteanordnung, in der die darin enthaltenen Sensorsteuergeräte mit jeweils zwei Busanschlüssen ausgestattet sind. Hierdurch können diese mit identischer Hardware bereitgestellt werden. Je nach Funktionalität fungiert das eine oder das andere Sensorsteuergerät als Master, wobei dies durch die entsprechende Software in den Sensorsteuergeräten festgelegt wird. Hierdurch kann die technische Komplexität der Kommunikationseinrichtung reduziert werden.

### Bezugszeichenliste

- BDC: erstes Steuergerät
- SAS: zweites Steuergerät
- SGA: Steuergeräteanordnung
- SSG1: erstes Sensorsteuergerät
- SSG2: zweites Sensorsteuergerät
- SB: erster Datenbus
- AB: zweiter Datenbus
- PB: dritter Datenbus
- DB: vierter Datenbus
- F1: erste Funktionalität
- F2: zweite Funktionalität
- F3: dritte Funktionalität
- GW_{FDD}: Gateway
- GW_{AD}: Gateway
- OS_{1→2}: Objektdaten, die von dem ersten an das zweite Sensorsteuergerät übertragen werden
- OS_{2→1}: Objektdaten, die von dem zweiten an das erste Sensorsteuergerät übertragen werden
- AD1: erste Applikationsdaten
- AD2: zweite Applikationsdaten
- KD: Kalibrierdaten
- DFC: erste Daten
- FDD: Odometriedaten

## Patentansprüche

1. Kommunikationseinrichtung für ein Kraftfahrzeug, umfassend:
- ein erstes Steuergerät (BDC);
- ein zweites Steuergerät (SAS);
- eine Steuergeräteanordnung (SGA);
- einen ersten Datenbus (SB), an den das erste Steuergerat (BDC) und die Steuergeräteanordnung (SGA) zum Austausch von Daten angeschlossen sind;
- einen zweiten Datenbus (AB), an den das zweite Steuergerät (SAS) und die Steuergeräteanordnung (SGA) zum Austausch von Daten angeschlossen sind;
wobei
- die Steuergeräteanordnung (SGA) zumindest ein erstes Sensorsteuergerät (SSG1) zur Steuerung eines ersten Sensors und ein zweites Sensorsteuergerät (SSG2) zur Steuerung eines zweiten Sensors umfasst;
- der erste und der zweite Sensor sich überlappende Sensorerfassungsbereiche aufweisen;
- das erste und das zweite Sensorsteuergerät (SSG1, SSG2) über einen dritten Datenbus (PB) zumindest vorverarbeitete Sensordaten austauschen können;
- das erste und das zweite Sensorsteuergerät (SSG1) dazu ausgebildet sind, im Master-Slave-Betrieb bezüglich zumindest einer Funktionalität betrieben zu werden, wobei
= durch das erste Sensorsteuergerät (SSG1) als Master einer ersten Funktionalität (F1) erste Daten (DFC), welche durch das erste Steuergerät (BDC) an dem ersten Datenbus (SB) bereitgestellt sind, für die Steuergeräteanordnung (SGA) verarbeitet werden; und
= durch das zweite Sensorsteuergerät (SSG2) als Master einer zweiten Funktionalität (F2) erste Applikationsdaten (AD1) für das zweite Steuergerät (SAS) an dem zweiten Datenbus (AB) bereitgestellt werden.

2. Kommunikationseinrichtung nach Anspruch 1, bei der die ersten Daten (DFC) der ersten Funktionalität (F1) die Wartung und/oder Diagnose der Steuergeräteanordnung (SGA) betreffende Daten umfassen.

3. Kommunikationseinrichtung nach Anspruch 1 oder 2, bei der die zweite Funktionalität (F2) die Vorverarbeitung von, von dem ersten und dem zweiten Sensor erfassten Messdaten umfasst, wobei die vorverarbeiteten Messdaten als erste Applikationsdaten (AD1) bereitgestellt werden, welche durch die Sensoren erfasste Objekte und die Information über Position und/oder Bewegung relativ zu dem ersten und dem zweiten Sensor umfasst.

4. Kommunikationseinrichtung nach einem der vorhergehenden Ansprüche, bei der die zweite Funktionalität (F2) die Verarbeitung von, von dem ersten und dem zweiten Sensor erfassten Messdaten umfasst, wobei ein Ergebnis der Verarbeitung als zweite Applikationsdaten (AD2) über das erste Sensorsteuergerät (SSG1) als Slave an dem ersten Datenbus (SB) bereitgestellt werden zur Verarbeitung durch das erste Steuergerät (BDC).

5. Kommunikationseinrichtung nach Anspruch 3 oder 4, bei der die ersten Applikationsdaten (AD1) gegenüber den zweiten Applikationsdaten (AD2) einen größeren Datenumfang, insbesondere ein Mehrfaches, aufweisen.

6. Kommunikationseinrichtung nach einem der vorhergehenden Ansprüche, bei der dem zweiten Sensorsteuergerät (SSG2) als Master der zweiten Funktionalität (F2) von dem ersten Sensorsteuergerät (SSG1) Sensordaten des ersten Sensors zur Verarbeitung bereitgestellt werden.

7. Kommunikationseinrichtung nach einem der vorhergehenden Ansprüche, bei der dem zweiten Sensorsteuergerät (SSG2) als Master der zweiten Funktionalität (F2) von dem ersten Sensorsteuergerät (SSG1) für eine Odometrieberechnung erforderliche Daten (FDD) zur Verarbeitung bereitgestellt werden, welche von dem ersten Steuergerät (BDC) an dem ersten Datenbus bereitgestellt sind.

8. Kommunikationseinrichtung nach einem der vorhergehenden Ansprüche, bei der durch das zweite Sensorsteuergerät (SSG2) als Master einer dritten Funktionalität (F3) dem ersten Sensorsteuergerät (SSG1) als Slave Kalibrierdaten bereitgestellt werden.

9. Kommunikationseinrichtung nach einem der vorhergehenden Ansprüche, bei der das erste Sensorsteuergerät (SSG1) und das zweite Sensorsteuergerät (SSG2) jeweils zwei Busanschlüsse aufweisen.

10. Kommunikationseinrichtung nach einem der vorhergehenden Ansprüche, bei der das erste Sensorsteuergerät (SSG1) und das zweite Sensorsteuergerät (SSG2) bezüglich ihrer Hardware identisch ausgebildet sind.

11. Kommunikationseinrichtung nach einem der vorhergehenden Ansprüche, bei der der erste und der zweite Sensor optische Sensoren oder Radarsensoren sind.

12. Verfahren zum Betreiben einer Kommunikationseinrichtung für ein Kraftfahrzeug, wobei die Kommunikationseinrichtung umfasst:
- ein erstes Steuergerät (BDC);
- ein zweites Steuergerät (SAS);
- eine Steuergeräteanordnung (SGA), die zumindest ein erstes Sensorsteuergerät (SSG1) zur Steuerung eines ersten Sensors und ein zweites Sensorsteuergerät (SSG2) zur Steuerung eines zweiten Sensors umfasst, wobei der erste und der zweite Sensor sich überlappende Sensorerfassungsbereiche aufweisen;
- einen ersten Datenbus (SB), an den das erste Steuergerät (BDC) und die Steuergeräteanordnung (SGA) zum Austausch von Daten angeschlossen sind;
- einen zweiten Datenbus (AB), an den das zweite Steuergerät (SAS) und die Steuergeräteanordnung (SGA) zum Austausch von Daten angeschlossen sind;
bei dem
- das erste und das zweite Sensorsteuergerät (SSG1, SSG2) über einen dritten Datenbus (PB) zumindest vorverarbeitete Sensordaten austauschen;
- das erste und das zweite Sensorsteuergerät (SSG1) in einem Master-Slave-Betrieb bezüglich zumindest einer Funktionalität betrieben werden, wobei
= durch das erste Sensorsteuergerät (SSG1) als Master einer ersten Funktionalität erste Daten (DFC), welche durch das erste Steuergerät (BDC) an dem ersten Datenbus (SB) bereitgestellt werden, für die Steuergeräteanordnung (SGA) verarbeitet werden; und
= durch das zweite Sensorsteuergerät (SSG2) als Master einer zweiten Funktionalität erste Applikationsdaten (AD1) für das zweite Steuergerät (SAS) an dem zweiten Datenbus (AB) bereitgestellt werden.

## Claims

1. A communication device for a motor vehicle, comprising:
- a first control unit (BDC);
- a second control unit (SAS);
- a control unit arrangement (SGA);
- a first data bus (SB) to which the first control unit (BDC) and the control unit arrangement (SGA) are connected for exchanging data;
- a second data bus (AB) to which the second control unit (SAS) and the control unit arrangement (SGA) are connected for exchanging data;
wherein
- the control unit arrangement (SGA) comprises at least a first sensor control unit (SSG1) for controlling a first sensor and a second sensor control unit (SSG2) for controlling a second sensor;
- the first sensor and the second sensor have overlapping sensor detection regions;
- the first and second sensor control units (SSG1, SSG2) can exchange at least preprocessed sensor data via a third data bus (PB);
- the first and second sensor control units (SSG1) are configured to be operated in master-slave operation with respect to at least one functionality, wherein
= first items of data (DFC) which are provided by the first control unit (BDC) at the first data bus (SB) are processed for the control unit arrangement (SGA) by the first sensor control unit (SSG1) as master of a first functionality (F1); and
= first application data (AD1) for the second control unit (SAS) are provided at the second data bus (AB) by the second sensor control unit (SSG2) as master of a second functionality (F2).

2. A communication device according to claim 1, wherein the first items of data (DFC) of the first functionality (F1) comprise data relating to the maintenance and/or diagnosis of the control unit arrangement (SGA).

3. A communication device according to claim 1 or claim 2, wherein the second functionality (F2) comprises the preprocessing of measured data acquired by the first and second sensor, the preprocessed measured data being provided as first application data (AD1) which comprise objects detected by the sensors and information about position and/or movement relative to the first and second sensor.

4. A communication device according to any one of the preceding claims, wherein the second functionality (F2) comprises the processing of measured data acquired by the first and second sensor, a result of the processing being provided as second application data (AD2) via the first sensor control unit (SSG1) as slave at the first data bus (SB) for processing by the first control unit (BDC).

5. A communication device according to claim 3 or claim 4, wherein compared to the second application data (AD2), the first application data (AD1) have a larger data volume, more especially they are several times larger.

6. A communication device according to any one of the preceding claims, wherein sensor data of the first sensor are provided for processing to the second sensor control unit (SSG2) as master of the second functionality (F2) by the first sensor control unit (SSG1).

7. A communication device according to any one of the preceding claims, wherein data (FDD) required for an odometry calculation are provided for processing to the second sensor control unit (SSG2) as master of the second functionality (F2) by the first sensor control unit (SSG1), which data are provided at the first data bus by the first control unit (BDC).

8. A communication device according to any one of the preceding claims, wherein calibration data are provided to the first sensor control unit (SSG1) as slave by the second sensor control unit (SSG2) as master of a third functionality (F3).

9. A communication device according to any one of the preceding claims, wherein the first sensor control unit (SSG1) and the second sensor control unit (SSG2) each have two bus connections.

10. A communication device according to any one of the preceding claims, wherein the first sensor control unit (SSG1) and the second sensor control unit (SSG2) are configured identically in respect of their hardware.

11. A communication device according to any one of the preceding claims, wherein the first sensor and the second sensor are optical sensors or radar sensors.

12. A method for operating a communication device for a motor vehicle, wherein the communication device comprises:
- a first control unit (BDC);
- a second control unit (SAS);
- a control unit arrangement (SGA) which comprises at least a first sensor control unit (SSG1) for controlling a first sensor and a second control unit (SSG2) for controlling a second sensor, the first sensor and the second sensor having overlapping sensor detection regions;
- a first data bus (SB) to which the first control unit (BDC) and the control unit arrangement (SGA) are connected for exchanging data;
- a second data bus (AB) to which the second control unit (SAS) and the control unit arrangement (SGA) are connected for exchanging data;
wherein
- the first and second sensor control units (SSG1, SSG2) exchange at least preprocessed sensor data via a third data bus (PB);
- the first and second sensor control units (SSG1) are operated in master-slave operation with respect to at least one functionality, wherein
= first items of data (DFC) which are provided by the first control unit (BDC) at the first data bus (SB) are processed for the control unit arrangement (SGA) by the first sensor control unit (SSG1) as master of a first functionality; and
= first application data (AD1) for the second control unit (SAS) are provided at the second data bus (AB) by the second sensor control unit (SSG2) as master of a second functionality.

## Revendications

1. Installation de communication pour un véhicule automobile comprenant :
- un premier appareil de commande (BDC),
- un second appareil de commande (SAS),
- un dispositif d'appareils de commande (SGA),
- un premier bus de données (SB), auquel sont connectés le premier appareil de commande (BDC) et le second appareil de commande (SGA) pour permettre un échange de données,
- un second bus de données (AB) auquel sont connectés le second appareil de commande (SAS) et le dispositif d'appareils de commande (SGA) pour permettre un échange de données,
installation de communication dans laquelle
- le dispositif d'appareils de commande (SGA) comprend au moins un premier appareil de commande de détecteur (SSG1) pour permettre de commander un premier détecteur et un second appareil de commande de détecteur (SSG2) pour permettre de commander un second détecteur,
- le premier et le second détecteurs comprennent des plages de détection qui se chevauchent,
- le premier et le second appareils de commande de détecteur (SSG1, SSG2) peuvent échanger par l'intermédiaire d'un troisième bus de données (PB) au moins des données de détecteur prétraitées,
- le premier et le second appareils de commande de détecteur (SSG1, SSG2) sont réalisés pour pouvoir être actionnés selon un mode de fonctionnement, maître-esclave relativement à au moins une fonctionnalité, selon laquelle :
• par le premier appareil de commande de détecteur (SSG1) fonctionnant en tant que maître d'une première fonctionnalité (F1), des premières données (DFC) qui sont fournies par le premier appareil de commande (BDC) au premier bus de données (SB) sont traitées pour le dispositif d'appareil de commande (SGA), et
• par le second appareil de commande de détecteur (SSG2) fonctionnant en tant que maître d'une seconde fonctionnalité (F2), des premières données d'application (AD1) pour le second appareil de commande (SAS) sont fournies au second bus de commande (AB).

2. Installation de communication conforme à la revendication 1, dans laquelle les premières données (DFC) de la première fonctionnalité (F1) comprennent des données concernant la maintenance et/ou le diagnostic du dispositif d'appareils de commande (SGA).

3. Installation de communication conforme à la revendication 1 ou 2, dans laquelle la seconde fonctionnalité (F2) comprend le prétraitement de données de mesure détectées par le premier et par le second détecteur, les données de mesure prétraitées étant fournies en tant que premières données d'application (AD1) comprenant des objets détectés par les détecteurs et des informations concernant la position et/ ou le déplacement relativement au premier et au second capteurs.

4. Installation de communication conforme à l'une des revendications précédentes, dans laquelle la seconde fonctionnalité (F2) comprend le traitement de données de mesure détectées par le premier et par le second détecteur, le résultat du traitement étant fourni en tant que secondes données d'application (AD2) par l'intermédiaire du premier appareil de commande de détecteur (SSG1) fonctionnant en tant qu'esclave au premier bus de données (SB) pour permettre leur traitement par le premier appareil de commande (BDC).

5. Installation de communication conforme à la revendication 3 ou 4, dans laquelle les premières données d'application (AD1) ont par rapport aux secondes données d'application (AD2) un plus grand périmètre de données en particulier un multiple de celui-ci.

6. Installation de communication conforme à l'une des revendications précédentes, dans laquelle sont fournies par le premier appareil de commande de détecteur (SSG1) au second appareil de commande de détecteur (SSG2) fonctionnant en tant que maître de la seconde fonctionnalité (F2) des données de détecteur du premier détecteur pour permettre leur traitement.

7. Installation de communication conforme à l'une des revendications précédentes, dans laquelle sont fournies par le premier appareil de commande de détecteur (SSG1), au second appareil de commande de détecteur (SSG2) fonctionnant en tant que maître de la seconde fonctionnalité (F2) pour permettre leur traitement, des données (FDD) nécessaires pour permettre un calcul d'odométrie qui sont fournies au premier bus de données par le premier appareil de commande (BDC).

8. Installation de communication conforme à l'une des revendications précédentes dans laquelle par l'intermédiaire du second appareil de commande de détecteur (SSG2) fonctionnant en tant que maître d'une troisième fonctionnalité (F3) des données de calibrage sont fournies au premier appareil de commande de détecteur (SSG1) fonctionnant en tant qu'esclave.

9. Installation de communication conforme à l'une des revendications précédentes, dans laquelle le premier appareil de commande de détecteur (SSG1) et le second appareil de commande de détecteur (SSG2) comprennent chacun deux connexions de bus.

10. Installation de communication conforme à l'une des revendications précédentes, dans laquelle le premier appareil de commande de détecteur (SSG1) et le second appareil de commande de détecteur (SSG2) sont réalisés de manière identique concernant leur matériel.

11. Installation de communication conforme à l'une des revendications précédentes, dans laquelle le premier et le second détecteurs sont des détecteurs optiques ou des détecteurs radars.

12. Procédé de gestion d'une installation de communication pour un véhicule automobile, cette installation de communication comprenant :
- un premier appareil de commande (BDC),
- un second appareil de commande (SAS),
- un dispositif d'appareils de commande (SGA) qui comprend au moins un premier appareil de commande de détecteur (SSG1) pour permettre de commander un premier détecteur et un second appareil de commande de détecteur (SSG2) pour permettre de commander un second détecteur, le premier et le second détecteurs ayant des plages de détection qui se chevauchent,
- un premier bus de données (SB) auquel sont connectés le premier appareil de commande (BDC) et le dispositif d'appareils de commande (SGA) pour permettre un échange de données,
- un second bus de données (AB) auquel sont connectés le second appareil de commande (SAS) et le dispositif d'appareils de commande (SGA) pour permettre un échange de données,
procédé selon lequel,
- le premier et le second appareils de commande de détecteur (SSG1, SSG2) échangent au moins des données de détecteur prétraitées par l'intermédiaire d'un troisième bus de données (PB),
- le premier et le second appareils de commande de détecteur (SSG1, SSG2) sont actionnés selon un mode de fonctionnement maître-esclave relativement à au moins une fonctionnalité, selon lequel
• par le premier appareil de commande de détecteur (SSG1) fonctionnant en tant que maître d'une première fonctionnalité, des premières données (DFC) qui sont fournies par l'intermédiaire du premier appareil de commande (BDC) au premier bus de données (SB) sont traitées pour le dispositif d'appareil de commande (SGA), et
• par le second appareil de commande de détecteur (SSG2) fonctionnant en tant que maître d'une seconde fonctionnalité des premières données d'application (AD1) pour le second appareil de commande (SAS) sont fournies au second bus de données (AB).
